# EUROPEAN PATENT SPECIFICATION

(11) **EP 4 005 856 B1**
(45) Date of publication and mention of the grant of the patent: **14.10.2026**
(21) Application number: 20846164.0
(22) Date of filing: 30.07.2020
(51) Int. Cl.: B60L 53/14

(54) **DISCHARGE VEHICLE AND VEHICLE CHARGING SYSTEM**
ENTLADUNGSFAHRZEUG UND FAHRZEUGLADESYSTEM
VÉHICULE DE DÉCHARGE ET SYSTÈME DE CHARGE DE VÉHICULE

(30) Priority: 31.07.2019 CN 201910703490
(43) Date of publication of application: 01.06.2022
(73) Proprietor: BYD Company Limited, Shenzhen, Guangdong 518118 (CN)
(72) Inventor: HUANG, Bingjian, Shenzhen, Guangdong 518118 (CN); LV, Hao, Shenzhen, Guangdong 518118 (CN); QI, Axi, Shenzhen, Guangdong 518118 (CN); YANG, Zhifei, Shenzhen, Guangdong 518118 (CN)
(74) Representative: Arnold & Siedsma
(86) International application number: PCT/CN2020/105882
(87) International publication number: WO 2021/018253

(56) References cited:
- CN-A- 104 158 240
- CN-A- 106 849 305
- CN-A- 109 484 221
- CN-U- 207 916 598
- CN-U- 207 916 598
- JP-B2- 5 945 936
- US-B2- 10 059 210

## Description

### FIELD

The present disclosure relates to the field of charging specifically vehicle-to-vehicle DC step-down charging using a discharging vehicle's traction battery, motor inverter/motor windings, and/ or a DC/DC step-down circuit to charge another vehicle's battery.

### BACKGROUND

With the development of the electric vehicle industry, a fast charging technology has become a key technology for electric vehicles. A dedicated DC charging station (charging cabinet) can achieve quick charging for batteries of the electric vehicles. However, such infrastructure is fixed and immovable, and therefore cannot satisfy all charging requirements of the electric vehicles.

JP 5 945936 B2 discloses a rescue vehicle including a 1st battery, a 2nd battery, an inverter that converts a DC voltage of the 1st battery into an AC voltage, and a motor for driving a vehicle operated by the inverter and charges an external battery with DC power of at least the 1st battery.

CN 207 916 598 U discloses a vehicle comprising a first battery pack, a first fast charging port socket including a first charging power interface, a first ground interface and a first connection detection interface, a motor controller connected to the first battery pack or the first charging power interface through a first switch circuit, a generator connected with the engine of the vehicle and connected with the motor controller through a wiring harness, and a first vehicle controller comprising a driving module, a voltage detection module, a CAN communication module, and a central processing module.

### SUMMARY

The present disclosure is intended to resolve at least one of the technical problems in the related art to some extent.

To this end, the present disclosure is intended to provide a discharging vehicle which can realise DC step-down charging of a low-voltage vehicle by a high-voltage vehicle, and which provides a redundant DC step-down charging architecture by using, as alternative discharging branches, a first discharging branch formed by a motor and a motor control circuit of the discharging vehicle and a second discharging branch formed by a step-down circuit.

The present disclosure is further intended to provide a vehicle charging system.

In order to achieve the above purposes, an embodiment of a first aspect of the present disclosure proposes a discharging vehicle. The discharging vehicle includes a discharging control device, a first power battery, a motor, a motor control circuit and a step-down circuit. The motor includes three-phase winding inductors and a neutral wire connected to the three-phase winding inductors. A first electrode of the first power battery is connected to a first input terminal of the motor control circuit. A second electrode of the first power battery is connected to a second input terminal of the motor control circuit. Three output terminals of the motor control circuit are respectively connected to the three-phase winding inductors. When the discharging vehicle establishes a charging connection to an external to-be-charged vehicle by using a charging connection device, the neutral wire is connected to a first electrode of a second power battery of the to-be-charged vehicle by the charging connection device, the second electrode of the first power battery is connected to a second electrode of the second power battery by the charging connection device, and the discharging control device is configured to control the motor control circuit, so as to realise DC step-down charging of the second power battery by the first power battery. A first input terminal of the step-down circuit is connected to the first electrode of the first power battery, a second input terminal of the step-down circuit is connected to the second electrode of the first power battery, a first output terminal of the step-down circuit is connected to the first electrode of the second power battery by the charging connection device, and a second output terminal of the step-down circuit is connected to the second electrode of the second power battery by the charging connection device. A first discharging branch is formed by the motor and the motor control circuit, and a second discharging branch is formed by the step-down circuit. The first discharging branch and the second discharging branch are disposed in parallel between the first power battery and the second power battery, and the first power battery performs discharging to the second power battery through one of the first discharging branch or the second discharging branch.

In order to achieve the above purposes, an embodiment of a second aspect of the present disclosure provides a vehicle charging system. The vehicle charging system includes the discharging vehicle according to the first aspect, a to-be-charged vehicle, and a charging connection device connected therebetween. The to-be-charged vehicle includes a charging control device and a second power battery. A first electrode of the second power battery is connected to the neutral wire by the charging connection device, and a second electrode of the second power battery is connected to the second electrode of the first power battery by the charging connection device. The second power battery may be charged through one of the first discharging branch formed by the motor and the motor control circuit or the second discharging branch formed by the step-down circuit.

The vehicle charging system in this embodiment of the present disclosure can realise DC step-down charging of the to-be-charged vehicle by the discharging vehicle through the motor control circuit and the motor windings and/or through the step-down circuit. Therefore, the vehicle charging system provides a redundant DC step-down charging architecture, improving reliability and availability of vehicle-to-vehicle charging.

### BRIEF DESCRIPTION OF THE DRAWINGS

FIG. 1 is a schematic structural diagram of a vehicle charging system according to a first embodiment of the present disclosure.
FIG. 2 is a schematic structural diagram of a vehicle charging system according to a second embodiment of the present disclosure.
FIG. 3 is a structural block diagram of a step-down circuit according to an embodiment of the present disclosure.
FIG. 4 is a schematic diagram of a working principle of the step-down circuit according to an embodiment of the present disclosure.
FIG. 5 is a schematic structural diagram of a vehicle charging system according to a fourth embodiment of the present disclosure.
FIG. 6 is a schematic structural diagram of a vehicle charging system according to a fifth embodiment of the present disclosure.
FIG. 7 is a schematic diagram of single-phase charging according to an example of the present disclosure.
FIG. 8 is a schematic diagram of two-phase charging according to an example of the present disclosure.
FIG. 9 is a schematic diagram of three-phase charging according to an example of the present disclosure.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

A discharging vehicle and a vehicle charging system in the embodiments of the present disclosure are described below with reference to the drawings.

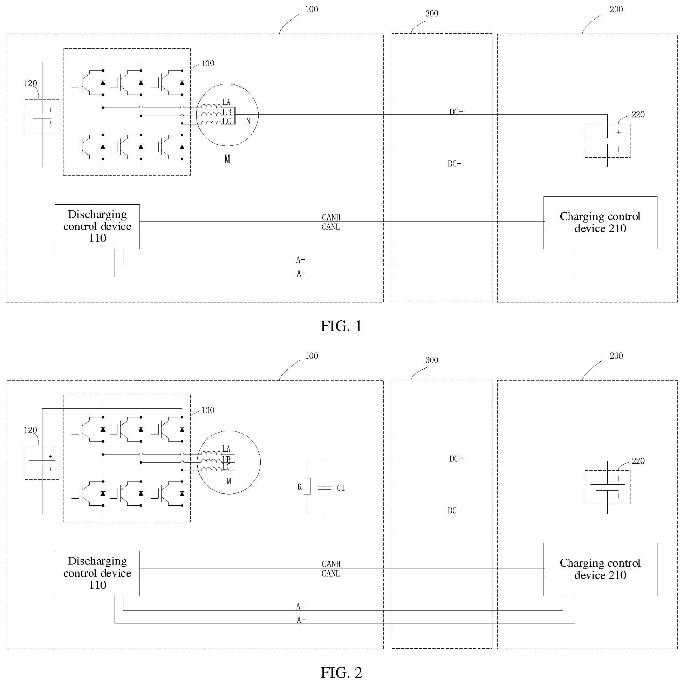

FIG. 1 is a schematic structural diagram of a discharging vehicle according to an embodiment of the present disclosure. As shown in FIG. 1, the discharging vehicle 100 includes a discharging control device 110, a first power battery 120, a motor control circuit 130, and a motor M. The motor M includes three-phase winding inductors LA, LB, LC and a neutral wire N. The neutral wire N is connected to one ends of the three-phase winding inductors LA, LB, and LC. A first electrode of the first power battery 120 is connected to a first input terminal of the motor control circuit 130. A second electrode of the first power battery 120 is connected to a second input terminal of the motor control circuit 130. Three output terminals of the motor control circuit 130 are respectively connected to the three-phase winding inductors LA, LB, and LC.

Referring to FIG. 1, when the discharging vehicle 100 establishes a charging connection to a to-be-charged vehicle 200 by using an external charging connection device 300, the neutral wire N is connected to a first electrode of a second power battery 220 of the to-be-charged vehicle 200 by the charging connection device 300, and the second electrode of the first power battery 120 is connected to a second electrode of the second power battery 220 by the charging connection device 300.

In this embodiment, the first electrode may be a positive electrode and the second electrode may be a negative electrode. The discharging control device 110 is configured to control the motor control circuit 130 to realize DC step-down charging of the second power battery 220 by the first power battery 120.

In particular, referring to FIG. 1, the motor control circuit 130 may be a three-phase bridge inverter circuit, which is composed of 6 switch tubes (such as an insulated gate bipolar transistor (IGBT) tube or a metal oxide semiconductor (MOS) tube). The motor control circuit 130 of the discharging vehicle 100 and the three-phase winding inductors LA, LB, and LC of the motor M are used, the neutral wire N is led out as a positive electrode, and the negative electrode of the first power battery 120 is used as a negative electrode, the positive terminal and the negative terminals are respectively connected to the positive electrode and the negative electrode of the second power battery 220 of the to-be-charged vehicle 200 by the charging connection device 300, and an upper-bridge switch tube is controlled to be turned on or off, thereby realizing high-power DC step-down charging. The discharging vehicle can realize, by using the motor control circuit and the motor windings, charging of a low-voltage electric vehicle by a high-voltage electric vehicle. The structure is simple and is easy to realize, and the cost is low.

In an embodiment of the present disclosure, as shown in FIG. 2, the discharging vehicle 100 further includes a bleeder resistor R and a first capacitor C1. One end of the bleeder resistor R is connected to the neutral wire N, and another end of the bleeder resistor R is connected to the second electrode of the first power battery 120. The first capacitor C1 is connected in parallel to the bleeder resistor R. By adding the first capacitor and the bleeder resistor to the positive terminal and the negative terminal, stable high-power DC step-down can be realized, and ripple voltages and currents can be reduced. In addition, the first capacitor C1 further has a voltage division function, which reduces the adverse impact of the higher voltage of the discharging vehicle 100 on the lower voltage of the to-be-charged vehicle 200 and realizes voltage reduction.

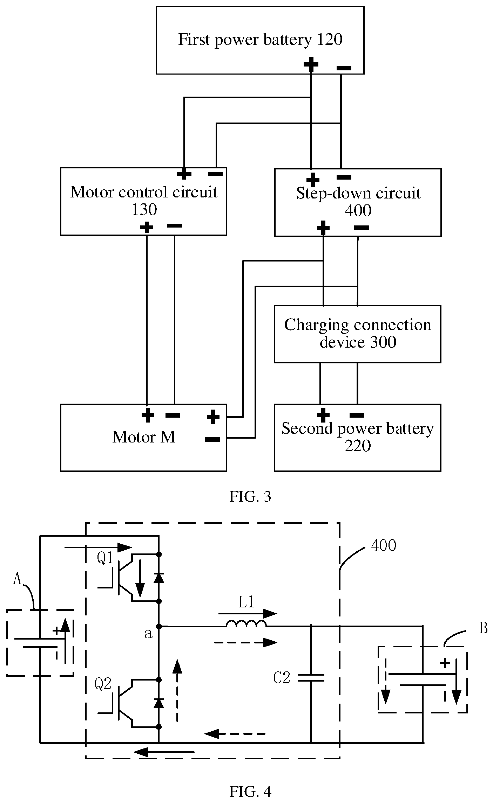

In an embodiment of the present disclosure, as shown in FIG. 3, the discharging vehicle 100 further includes a step-down circuit 400. A first input terminal of the step-down circuit 400 is connected to the first electrode of the first power battery 120. A second input terminal of the step-down circuit 400 is connected to the second electrode of the first power battery 120. A first output terminal of the step-down circuit 400 is connected to the first electrode of the second power battery 220 by the charging connection device 300. A second output terminal of the step-down circuit 400 is connected to the second electrode of the second power battery 220 by the charging connection device 300. The step-down circuit 400 is configured to realize DC step-down charging of the second power battery 220 by the first power battery 120.

Specifically, as shown in FIG. 4, the step-down circuit 400 includes a first switch tube Q1, a second switch tube Q2, a first inductor L1, and a second capacitor C2. A first end of the first switch tube Q1 is connected to the first electrode of the first power battery 120. A first end of the second switch tube Q2 is connected to a second end of the first switch tube Q1 to form a first node a, and a second end of the second switch tube Q2 is connected to the second electrode of the first power battery 120. One end of the first inductor L1 is connected to the first node a, and another end of the first inductor L1 is connected to the first electrode of the second power battery 220 by the charging connection device 300. One end of the second capacitor C2 is connected to the other end of the first inductor L1, and another end of the second capacitor C2 is connected to the second electrode of the first power battery 120. The discharging control device 110 is further connected to control ends of the first switch tube Q1 and the second switch tube Q2 to respectively control the first switch tube Q1 and the second switch tube Q2 to be turned on or off.

The first switch tube Q1 and the second switch tube Q2 both may be IGBT tubes or MOS tubes.

Specifically, referring to FIG. 4, when the first switch tube Q1 is turned on and the second switch tube Q2 is turned off, a loop is formed by the first power battery 120, the first inductor L1, and the second power battery 220, and a voltage of the second power battery 220 is equal to a voltage of the first power battery 120 minus a voltage of the first inductor L1. When the first switch tube Q1 and the second switch tube Q2 are both turned off, a loop is formed by the first inductor L1, the second power battery 220, and a diode of the second switch tube Q2, and the voltage of the second power battery 220 is equal to the voltage of the first inductor L1 minus a voltage across the diode. Therefore, by designing the parameter values of the first inductor L1 and the second capacitor C2 and controlling the first switch tube Q1 to be turned on or off, the DC step-down charging of the second power battery 220 by the first power battery 120 can be realized. It should be noted that the control end of the second switch tube Q2 may also be idle, that is, not connected to the discharging control device 110 and is always in an off state.

It should be noted that a step-down circuit is formed by the motor control circuit 130, the motor M, and the first capacitor C1. The motor control circuit 130 includes three-phase bridge arms U, V, and W. A switch tube is disposed on each of an upper bridge arm and a lower bridge arm of each-phase bridge arm. Midpoints of the upper bridge arm and the lower bridge arm of each phase bridge arm are connected to the corresponding winding inductors of the motor. Specifically, the midpoint of the phase-U bridge arm is connected to the phase-A winding inductor LA, the midpoint of the phase-V bridge arm is connected to the phase-B winding inductor LB, and the midpoint of the phase-W bridge arm is connected to the phase-C winding inductor LC. During the discharging of the first power battery 110, each-phase bridge arm of the motor control circuit 130 can work independently, each-phase bridge arm can work synchronously, and each-phase bridge arm can perform phase alternating according to a preset phase difference. A step-down principle of the step-down circuit formed by the motor control circuit 130, the motor M, and the first capacitor C1 is similar to a step-down principle of the step-down circuit 400, and therefore details are not described herein.

Specifically, a first discharging branch is formed by the motor M and the motor control circuit 130, and a second discharging branch is formed by the step-down circuit 400. The first discharging branch and the second discharging branch are disposed in parallel between the first power battery 120 and the second power battery 220. The first power battery 120 may perform discharging to the second power battery 220 through one of the first discharging branch or the second discharging branch.

In this embodiment, the step-down circuit 400 is disposed in the discharging vehicle 100. The step-down circuit formed by the motor control circuit 130, the motor M, and the first capacitor C1 and the step-down circuit 400 are disposed in parallel between the two power batteries, which realizes the redundant step-down design. The step-down circuit 400 is simple and is easy to implement. By means of the step-down circuit, the discharging vehicle 100 can still realize the DC step-down charging of the to-be-charged vehicle 200 when the motor control circuit 130 and the motor M are faulty.

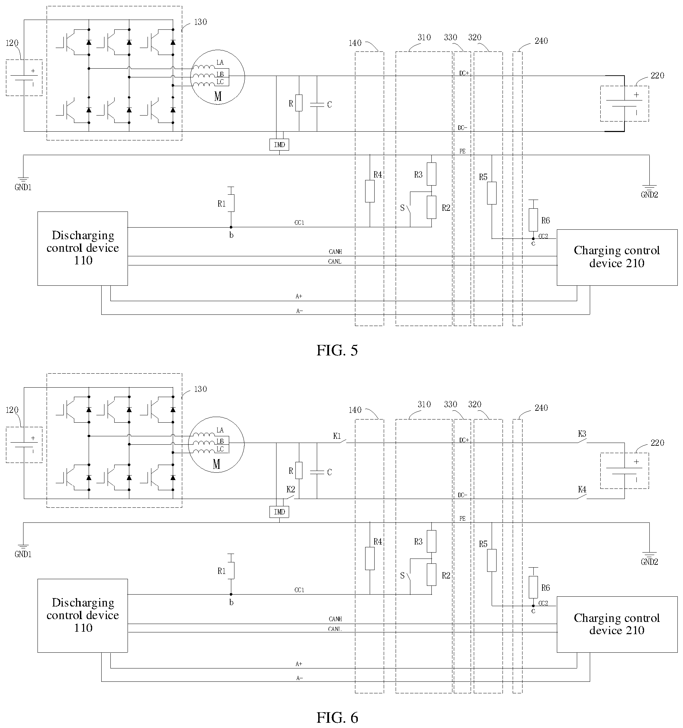

Further, as shown in FIG. 5, a first adapter portion 310 includes a second resistor R2, a third resistor R3, and a trigger switch S. One end of the second resistor R2 is connected to a CC1 pin of the first adapter portion 310. One end of the third resistor R3 is connected to a PE pin of the first adapter portion 310. Another end of the third resistor R3 is connected to an other end of the second resistor R2. The trigger switch S is connected in parallel to the second resistor R2. In this example, the discharging outlet 140 includes a fourth resistor R4, and the discharging vehicle 100 further includes a first resistor R1. One end of the fourth resistor R4 is connected to a PE hole of the discharging outlet 140, and another end of the fourth resistor R4 is connected to one end of the first resistor R1 to form a first detection point b. Another end of the first resistor R1 is connected to a first pull-up voltage U1.

During mating between the first adapter portion 310 and the discharging outlet 140, turn-on of the trigger switch S may be used as a trigger condition. Therefore, when the switch S is turned on, the vehicle is caused to enter a travel-forbidden state through interlocking or other control measures.

In this embodiment, the discharging control device 110 is further configured to detect a voltage of the first detection point b, and determine a status of the connection between the first adapter portion 310 and the discharging outlet 140 according to the voltage of the first detection point b. The connection status includes unconnected, semi-connected, fully connected, and the like.

In an embodiment of the present disclosure, as shown in FIG. 6, the discharging vehicle 100 further includes a first switch K1 and a second switch K2. One end of the first switch K1 is connected to the neutral wire N, and another end of the first switch K1 is connected to a DC+ hole of the discharging outlet 140. One end of the second switch K2 is connected to the second electrode of the first power battery 120, and another end of the second switch K2 is connected to a DC- hole of the discharging outlet 140.

In this embodiment, the discharging control device 110 is further configured to control, according to the status of the connection between the first adapter portion 310 and the discharging outlet 140 or charging and discharging data, the first switch K1 and the second switch K2 to be turned on or off.

In an embodiment of the present disclosure, the discharging control device 110 is further configured to: acquire a minimum value of a maximum allowable discharging current of the discharging vehicle 100, a maximum allowable charging current of the to-be-charged vehicle 200, and a maximum allowable passing current of the charging connection device 300; and perform single-phase charging on the second power battery 220 by using the motor control circuit 130 when the minimum value is less than a first preset value; perform two-phase charging on the second power battery 220 by using the motor control circuit 130 when the minimum value is greater than or equal to the first preset value and less than a second preset value; or perform three-phase charging on the second power battery 220 by using the motor control circuit 130 when the minimum value is greater than or equal to the second preset value.

The first preset value and the second preset value may be calibrated as required. It should be noted that when the second resistor R2 and the third resistor R3 in the first adapter portion 310 have different resistance values, the maximum allowable passing current of the charging connection device 300 are different.

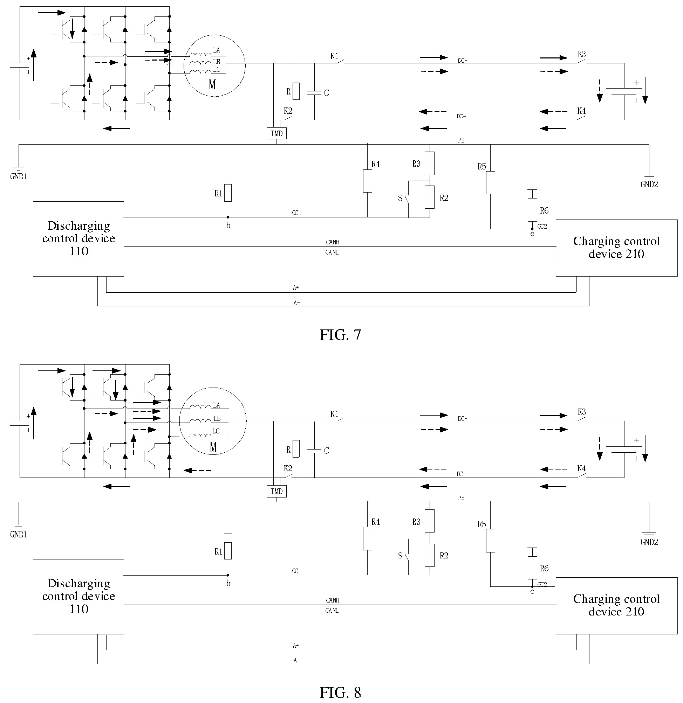

Specifically, as shown in FIG. 7, when the minimum value of the maximum allowable discharging current of the discharging vehicle 100, the maximum allowable charging current of the to-be-charged vehicle 200, and the maximum allowable passing current of the charging connection device 300 is less than the first preset value, the discharging control device 110 of the discharging vehicle 100 may control a single phase-U upper-bridge IGBT to be turned on or off, so as to realize the single-phase DC charging of the to-be-charged vehicle 200. When the upper-bridge IGBT is turned on, the discharging vehicle 100 stores energy in the inductor LA and charges the second power battery 220 of the to-be-charged vehicle 200 through a solid-line loop in the figure. When the upper-bridge IGBT is turned off, the inductor LA releases the energy to charge the second power battery 220 of the to-be-charged vehicle 200, and freewheels through a diode in a lower-bridge IGBT (see a dashed-line loop in FIG. 7). It should be noted that single phase-V charging and single phase-W charging are similar to the single phase-U charging, and therefore details are not described herein again.

Specifically, as shown in FIG. 8, when the minimum value of the maximum allowable discharging current of the discharging vehicle 100, the maximum allowable charging current of the to-be-charged vehicle 200, and the maximum allowable passing current of the charging connection device 300 is greater than or equal to the first preset value and less than the second preset value, the discharging control device 110 of the discharging vehicle 100 controls the phase-U and phase-V upper-bridge IGBTs to be turned on or off, so as to realize the two-phase DC charging of the to-be-charged vehicle 200. When the upper-bridge IGBTs are turned on, the discharging vehicle 100 stores energy in the inductor LA and the inductor LB, and charges the second power battery 220 of the to-be-charged vehicle 200 through a solid-line loop in the figure. When the upper-bridge IGBTs are turned off, the inductor LA and the inductor LB release the energy to charge the second power battery 220 of the to-be-charged vehicle 200, and freewheel through corresponding diodes in the lower-bridge IGBT (see a dashed-line loop in FIG. 8). Certainly, the two-phase charging may selectively be phase-V and phase-W charging or phase-U and phase-W charging, and charging loops thereof are similar to that of phase-U and phase-V charging.

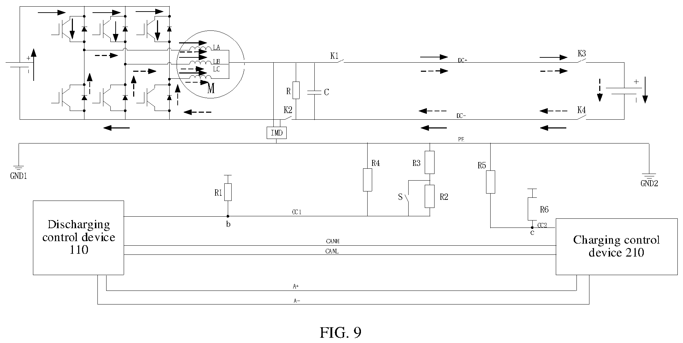

Specifically, as shown in FIG. 9, when the minimum value of the maximum allowable discharging current of the discharging vehicle 100, the maximum allowable charging current of the to-be-charged vehicle 200, and the maximum allowable passing current of the charging connection device 300 is greater than the second preset value, the discharging control device 110 of the discharging vehicle 100 controls the phase-U, phase-V, and phase-W upper-bridge IGBTs to be turned on or off, so as to realize the three-phase DC charging of the to-be-charged vehicle 200. When the upper-bridge IGBTs are turned on, the discharging vehicle 100 stores energy in the inductors LA, LB, and LC and charges the second power battery 220 of the to-be-charged vehicle 200 through a solid-line loop. When the upper-bridge IGBTs are turned off, the inductors LA, LB, and LC release the energy to charge the second power battery 220 of the to-be-charged vehicle 200, and freewheel through corresponding diodes in the lower-bridge IGBT (see a dashed-line loop in FIG. 9). It should be noted that during the three-phase charging, the phase-U, phase-V, and phase-W upper-bridge IGBTs may be controlled to be turned on or off in the following two manners: In a manner, the three-phase upper-bridge IGBTs are turned on or off simultaneously, and a phase difference is zero. In another manner, the three-phase upper-bridge IGBTs are alternately turned on or off, and a phase difference is 120°.

Thus, the discharging control device 110 acquires three-phase control signals. The three-phase control signals include a first control signal, a second control signal, and a third control signal that are sequentially different from each other by a preset phase. The discharging control device 110 controls, according to the first control signal, the two switch tubes of the phase-U bridge arm to alternately turn on, controls, according to the second control signal, the two switch tubes of the phase-V bridge arm to alternately turn on, and controls, according to the third control signal, the two switch tubes of the phase-W bridge arm to alternately turn on, to charge the external power battery. By means of the alternate three-phase control of the three-phase bridge arms, the DC side ripples are reduced, and the charging power of the external power battery can be effectively increased.

In this embodiment, compared with single-phase charging, the two-phase charging and the three-phase charging have larger charging speeds. Similarly, compared with the two-phase charging, the three-phase charging has a larger charging speed, which can greatly shorten the charging time and realize fast DC charging. In addition, by determining the current, the safety of the charging can be further improved, and the charging speed can be increased to a certain extent.

The present disclosure further provides a vehicle charging system. Referring to FIG. 1, the vehicle charging system includes the discharging vehicle 100 in the above embodiment, a to-be-charged vehicle 200, and a charging connection device 300 connected therebetween.

Referring to FIG. 1, the to-be-charged vehicle 200 includes a charging control device 210 and a second power battery 220. A first electrode of the second power battery 220 is connected to the neutral wire N by the charging connection device 300, and a second electrode of the second power battery 220 is connected to the second electrode of the first power battery 120 by the charging connection device 300. The first electrode may be a positive electrode and the second electrode may be a negative electrode.

The vehicle charging system can realize, by using the motor control circuit and the motor windings of the discharging vehicle, charging of a low-voltage electric vehicle by a high-voltage electric vehicle. The structure is simple and is easy to realize, and the cost is low.

In an embodiment of the present disclosure, as shown in FIG. 5, a charging outlet 240 is disposed on the to-be-charged vehicle 200, and the charging connection device 300 includes a first adapter portion 310, a second adapter portion 320, and a cable harness 330. The first adapter portion 310 is adaptively connected to the discharging outlet 140. The second adapter portion 320 is adaptively connected to the discharging outlet 240; The cable harness 330 is connected between the first adapter portion 310 and the second adapter portion 320.

Specifically, referring to FIG. 5, the cable harness 330 includes a DC+ line, a DC- line, a PE line, a CANH line, a CANL line, an A+ line, and an A- line. A DC+ pin, a DC- pin, a PE pin, a CANH pin, a CANL pin, an A+ pin, and an A- pin are disposed on each of the first adapter portion 310 and the second adapter portion 320, and are respectively correspondingly connected to the DC+ line, the DC- line, the PE line, the CANH line, the CANL line, the A+ line, and the A- line. A CC1 pin and a CC2 pin are further disposed on each of the first adapter portion 310 and the second adapter portion 320.

Correspondingly, a CC1 hole, a CC2 hole, a DC+ hole, a DC- hole, a PE hole, a CANH hole, a CANL hole, an A+ hole, and an A- hole are disposed on each of the discharging outlet 140 and the charging outlet 240. The PE hole of the discharging outlet 140 is connected to a body ground GND1 of the discharging vehicle 100. The PE hole of the charging outlet 240 is connected to a body ground GND2 of the to-be-charged vehicle 200. The CANH hole and the CANL hole of the discharging outlet 140 are both connected to the discharging control device 110. The CANH hole and the CANL hole of the charging outlet 240 are both connected to the charging control device 210, so as to realize transmission of the charging and discharging data between the discharging control device 110 and the charging control device 210. The A+ hole and the A- hole of the discharging outlet 140 are both connected to the discharging control device 110. The A+ hole and the A- hole of the charging outlet 240 are both connected to the charging control device 210. In this way, the discharging control device 110 provides an auxiliary power supply to the charging control device 210.

The DC+ hole, the DC- hole, the PE hole, the CANH hole, the CANL hole, the A+ hole, the A- hole, the CC1 hole, and the CC2 hole on the discharging outlet 140 are respectively correspondingly connected to the DC+ pin, the DC- pin, the PE pin, the CANH pin, the CANL pin, the A+ pin, the A- pin, the CC1 pin, and the CC2 pin on the first adapter portion 310. The DC+ hole, the DC- hole, the PE hole, the CANH hole, the CANL hole, the A+ hole, the A- hole, the CC1 hole, and the CC2 hole on the charging outlet 240 are respectively correspondingly connected to the DC+ pin, the DC- pin, the PE pin, the CANH pin, the CANL pin, the A+ pin, the A- pin, the CC1 pin, and the CC2 pin on the second adapter portion 320.

As shown in FIG. 5, the second adapter portion 320 includes a fifth resistor R5. One end of the fifth resistor R5 is connected to the PE pin of the second adapter portion 320, and another end of the fifth resistor R5 is connected to the CC2 pin of the second adapter portion 320. The to-be-charged vehicle 100 further includes a sixth resistor R6. One end of the sixth resistor R6 is connected to the CC2 hole of the charging outlet 240 to form a second detection point c, and another end of the sixth resistor R6 is connected to a second pull-up voltage U2.

In this embodiment, the charging control device 210 is further configured to detect a voltage of the second detection point c, and determine a status of the connection between the second adapter portion 320 and the charging outlet 240 according to the voltage of the second detection point c. The connection status includes unconnected, semi-connected, fully connected, and the like.

By determining the connection status, the reliability of the charging can be improved, and the stability of the charging can be ensured to a certain extent.

It should be noted that, FIG. 5 shows only the connection between the CC1 pin of the first adapter portion 310 and the CC1 hole of the discharging outlet 140 and the connection between the CC2 pin of the second adapter portion 320 and the CC2 hole of the charging outlet 240. The charging outlet 240 further includes a resistor corresponding to the fourth resistor R4. The resistor is connected to the CC1 hole of the charging outlet 240. The first adapter portion 310 further includes a resistor corresponding to the fifth resistor R5. The resistor is connected to the CC2 hole of the discharging outlet by the CC2 pin of the first adapter portion 310, which is not shown in FIG. 5.

In an embodiment of the present disclosure, as shown in FIG. 6, the to-be-charged vehicle 200 further includes: a third switch K3 and a fourth switch K4. One end of the third switch K3 is connected to the first electrode of the second power battery 220, and another end of the third switch K3 is connected to the DC+ hole of the charging outlet 240. One end of the fourth switch K4 is connected to the second electrode of the second power battery 220, and another end of the fourth switch K4 is connected to the DC- hole of the charging outlet 240.

In this embodiment, the charging control device 210 is further configured to control, according to the status of the connection between the second adapter portion 320 and the charging outlet 240 or charging and discharging data, the third switch K3 and the fourth switch K4 to be turned on or off.

Specifically, when the first adapter portion 310 is completely connected to the discharging outlet 140 and the second adapter portion 320 is completely connected to the charging outlet 240, the discharging control device 110 may control K1 and K2 to be closed. In this case, the discharging vehicle 100 may perform a self-check. After the self-check is completed (no abnormality), the discharging control device 110 may control K1 and K2 to be opened, and start to periodically transmit a communication handshake message to the charging control device 210. Furthermore, the charging control device 210 may control the switches K3 and K4 to be closed, so that the charging loop is connected. At the same time, the charging control device may transmit status parameters of the second power battery 220 to the discharging control device 110. After detecting that the second power battery 220 is normal, the discharging control device 110 may control the switches K1 and K2 to be closed, so that the DC power supply loop is connected.

In an embodiment of the present disclosure, an insulation detection circuit IMD may be further disposed on each of the discharging vehicle 100 and the to-be-charged vehicle 200. As shown in FIG. 9, for example, in the discharging vehicle 100, a first end of the IMD is connected to the neutral wire N, a second end is connected to the second electrode of the first power battery 120, and a third end is connected to the first body ground GND1. In addition, the IMD may further have a switching function.

In the description of the present description, reference terms such as "an embodiment", "some embodiments", "example", "specific example", or "some examples" means that the specific features, structures, materials or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

In the description of the present disclosure, it is to be understood that the orientations or positional relationships indicted by terms such as "center", "longitudinal", "transverse", "length", "width", "thickness", "upper", "lower", "front", "rear", "left", "right", "vertical", "horizontal", "top", "bottom", "interior", "exterior", "clockwise", "counterclockwise", "axial", "radial", and "circumferential" are the orientations or positional relationships shown in the drawings, are merely to facilitate describing the present disclosure and to simplify the description, are not intended to indicate or imply that the referenced device or element must have a particular orientation, be constructed and operated in a particular orientation, and therefore are not to be construed as limiting the present disclosure.

In addition, terms "first" and "second" are used merely for the purpose of description, and shall not be construed as indicating or implying relative importance or implying a quantity of indicated technical features. Therefore, features defining "first" and "second" can explicitly or implicitly include at least one of the features. In description of the present disclosure, "multiple" means at least two, such as two and three unless it is specifically defined otherwise.

In the present disclosure, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. The specific meanings of the above terms in the present disclosure may be understood according to specific circumstances for a person of ordinary skill in the art.

In the present disclosure, unless otherwise explicitly specified and defined, a first feature being "on" or "under" a second feature may mean that the first feature is in direct contact with the second feature, or the first feature is in indirect contact with the second feature by using an intermediate medium. Moreover, the first feature being "over", "above", and "on" the second feature may mean that the first feature is directly above or obliquely above the second feature, or merely means that the first feature has a larger horizontal height than the second feature. The first feature being "under", "below" and "underneath" the second feature may mean that the first feature is directly below or obliquely below the second feature, or merely means that the first feature has a smaller horizontal height than the second feature.

## Claims

1. A discharging vehicle (100), comprising a discharging control device (110), a first power battery (120), a motor (M), and a motor control circuit (130), wherein the motor (M) comprises three-phase winding inductors (LA, LB, LC) and a neutral wire (N) connected to the three-phase winding inductors (LA, LB, LC), a first electrode of the first power battery (120) is connected to a first input terminal of the motor control circuit (130), a second electrode of the first power battery (120) is connected to a second input terminal of the motor control circuit (130), and three output terminals of the motor control circuit are respectively connected to the three-phase winding inductors (LA, LB, LC),
wherein, when the discharging vehicle (100) establishes a charging connection to an external to-be-charged vehicle (200) by using an external charging connection device (300), the neutral wire (N) is connected to a first electrode of a second power battery (220) of the to-be-charged vehicle (200) by the charging connection device (300), the second electrode of the first power battery (120) is connected to a second electrode of the second power battery (220) by the charging connection device (300), and the discharging control device (110) is configured to control the motor control circuit (130), so as to realize DC step-down charging of the second power battery (220) by the first power battery (120);
**characterized by** further comprising:
a step-down circuit (400), wherein a first input terminal of the step-down circuit (400) is connected to the first electrode of the first power battery (120), a second input terminal of the step-down circuit (400) is connected to the second electrode of the first power battery (120), a first output terminal of the step-down circuit (400) is connected to the first electrode of the second power battery (220) by the charging connection device (300), a second output terminal of the step-down circuit (400) is connected to the second electrode of the second power battery (220) by the charging connection device (300), and the step-down circuit (400) is configured to realize the DC step-down charging of the second power battery (220) by the first power battery (120); and
**in that** a first discharging branch is formed by the motor (M) and the motor control circuit (130), a second discharging branch is formed by the step-down circuit (400), the first discharging branch and the second discharging branch are disposed in parallel between the first power battery (120) and the second power battery (220), and the first power battery (120) performs discharging to the second power battery (220) through one of the first discharging branch or the second discharging branch.

2. The discharging vehicle according to claim 1, further comprising:
a bleeder resistor (R), wherein one end of the bleeder resistor (R) is connected to the neutral wire (N), and another end of the bleeder resistor (R) is connected to the second electrode of the first power battery (120); and
a first capacitor (C1), connected in parallel to the bleeder resistor (R).

3. The discharging vehicle according to claim 1, wherein the step-down circuit (400) comprises:
a first switch tube (Q1), wherein a first end of the first switch tube (Q1) is connected to the first electrode of the first power battery (120);
a second switch tube (Q2), wherein a first end of the second switch tube (Q2) is connected to a second end of the first switch tube (Q1) to form a first node (a), and a second end of the second switch tube (Q2) is connected to the second electrode of the first power battery (120);
a first inductor (L1), wherein one end of the first inductor (L1) is connected to the first node (a), and another end of the first inductor (L1) is connected to the first electrode of the second power battery (220) by the charging connection device (300); and
a second capacitor (C2), wherein one end of the second capacitor (C2) is connected to the other end of the first inductor (L1), and another end of the second capacitor (C2) is connected to the second electrode of the first power battery (120),
wherein the discharging control device (110) is further connected to control ends of the first switch tube (Q1) and the second switch tube (Q2) to respectively control the first switch tube (Q1) and the second switch tube (Q2) to be turned on or off.

4. The discharging vehicle according to any of claims 1 to 3, further comprising a discharging outlet (140) disposed on the discharging vehicle (100) to be adaptively connected to a first adapter portion (310) of the charging connection device (300), a DC+ hole, a DC- hole, a PE hole, a CANH hole, a CANL hole, an A+ hole, an A- hole, a CC1 hole, and a CC2 hole are disposed on the discharging outlet (140), the DC+ hole and the DC- hole of the discharging outlet (140) are respectively connected to the neutral wire (N) and the second electrode of the first power battery (120), the PE hole of the discharging outlet (140) is connected to a body ground (GND1) of the discharging vehicle (100), the CANH hole and the CANL hole of the discharging outlet (140) are both connected to the discharging control device (110), and the A+ hole and the A- hole of the discharging outlet (140) are both connected to the discharging control device (110),
wherein, when the discharging outlet (140) is adaptively connected to the first adapter portion (310), the DC+ hole, the DC- hole, the PE hole, the CANH hole, the CANL hole, the A+ hole, the A- hole, the CC1 hole, and the CC2 hole on the discharging outlet (140) are respectively correspondingly connected to a DC+ pin, a DC- pin, a PE pin, a CANH pin, a CANL pin, an A+ pin, an A- pin, a CC1 pin, and a CC2 pin on the first adapter portion (310).

5. The discharging vehicle according to claim 4, wherein the first adapter portion (310) comprises a second resistor (R2), a third resistor (R3), and a trigger switch (S), one end of the second resistor (R2) is connected to the CC1 pin of the first adapter portion (310), one end of the third resistor (R3) is connected to the PE pin of the first adapter portion (310), another end of the third resistor (R3) is connected to an other end of the second resistor (R2), and the trigger switch (S) is connected in parallel to the second resistor (R2),
wherein the discharging outlet (140) comprises a fourth resistor (R4), the discharging vehicle (100) further comprises a first resistor (R1), one end of the fourth resistor (R4) is connected to the PE hole of the discharging outlet (140), another end of the fourth resistor (R4) is connected to one end of the first resistor (R1) to form a first detection point (b), and another end of the first resistor (R1) is connected to a first pull-up voltage,
wherein the discharging control device (110) is further configured to detect a voltage of the first detection point (b), and determine a status of the connection between the first adapter portion (310) and the discharging outlet (140) according to the voltage of the first detection point (b).

6. The discharging vehicle according to claim 4 or 5, further comprising:
a first switch (K1), wherein one end of the first switch (K1) is connected to the neutral wire (N), and another end of the first switch (K1) is connected to the DC+ hole of the discharging outlet (140);
a second switch (K2), wherein one end of the second switch (K2) is connected to the second electrode of the first power battery (120), and another end of the second switch (K2) is connected to the DC- hole of the discharging outlet (140), wherein
the discharging control device (110) is further configured to control, according to the status of the connection between the first adapter portion (310) and the discharging outlet (140) or charging and discharging data, the first switch (K1) and the second switch (K2) to be turned on or off.

7. The discharging vehicle according to any of claims 1 to 6, wherein the discharging control device (110) is further configured to control the motor control circuit (130) to realize single-phase charging or two-phase charging or three-phase charging of the second power battery (220); wherein preferably the discharging control device (110) is further configured to:
acquire a minimum value of a maximum allowable discharging current of the discharging vehicle (100), a maximum allowable charging current of the to-be-charged vehicle (200), and a maximum allowable passing current of the charging connection device (300);
perform single-phase charging on the second power battery (220) by using the motor control circuit (130) when the minimum value is less than a first preset value;
perform two-phase charging on the second power battery (220) by using the motor control circuit (130) when the minimum value is greater than or equal to the first preset value and less than a second preset value;
perform three-phase charging on the second power battery (220) by using the motor control circuit (130) when the minimum value is greater than or equal to the second preset value.

8. A vehicle charging system, comprising: the discharging vehicle (100) according to any of claims 1 to 7, a to-be-charged vehicle (200), and a charging connection device (300) connected therebetween,
wherein the to-be-charged vehicle (200) comprises a second power battery (220), a first electrode of the second power battery (220) is connected to the neutral wire (N) by the charging connection device (300), and a second electrode of the second power battery (220) is connected to the second electrode of the first power battery (120) by the charging connection device (300).

9. The vehicle charging system according to claim 8, wherein a charging outlet (240) is disposed on the to-be-charged vehicle (200), and the charging connection device (300) comprises:
a first adapter portion (310), adaptively connected to the discharging outlet (140) of the discharging vehicle (100);
a second adapter portion (320), adaptively connected to the discharging outlet (240); and
a cable harness (330), connected between the first adapter portion (310) and the second adapter portion (320).

10. The vehicle charging system according to claim 9, wherein the cable harness (300) comprises a DC+ line, a DC- line, a PE line, a CANH line, a CANL line, an A+ line, and an A- line,
wherein a DC+ pin, a DC- pin, a PE pin, a CANH pin, a CANL pin, an A+ pin, and an A- pin are disposed on each of the first adapter portion (310) and the second adapter portion (320), and are respectively correspondingly connected to the DC+ line, the DC- line, the PE line, the CANH line, the CANL line, the A+ line, and the A- line,
wherein a CC1 pin and a CC2 pin are further disposed on each of the first adapter portion (310) and the second adapter portion (320).

11. The vehicle charging system according to claim 10, wherein a DC+ hole, a DC- hole, a PE hole, a CANH hole, a CANL hole, an A+ hole, an A- hole, a CC1 hole, and a CC2 hole are disposed on the charging outlet (240), the PE hole of the charging outlet (240) is connected to a body ground (GND2) of the to-be-charged vehicle (200), the CANH hole and the CANL hole of the charging outlet (240) are both connected to the charging control device (210), and the A+ hole and the A- hole of the charging outlet (240) are both connected to the charging control device (210),
wherein the DC+ hole, the DC- hole, the PE hole, the CANH hole, the CANL hole, the A+ hole, the A- hole, the CC1 hole, and the CC2 hole on the charging outlet (240) are respectively correspondingly connected to the DC+ pin, the DC- pin, the PE pin, the CANH pin, the CANL pin, the A+ pin, the A- pin, the CC1 pin, and the CC2 pin on the second adapter portion (320).

12. The vehicle charging system according to claim 10 or 11, wherein the first adapter portion (310) comprises a second resistor (R2), a third resistor (R3), and a trigger switch (S), one end of the second resistor (R2) is connected to the CC1 pin of the first adapter portion (310), one end of the third resistor (R3) is connected to the PE pin of the first adapter portion (310), another end of the third resistor (R3) is connected to an other end of the second resistor (R2), and the trigger switch (S) is connected in parallel to the second resistor (R2).

13. The vehicle charging system according to claim 11 or 12, wherein
the second adapter portion (320) comprises a fifth resistor (R5), one end of the fifth resistor (R5) is connected to the PE pin of the second adapter portion (320), and another end of the fifth resistor (R5) is connected to the CC2 pin of the second adapter portion (320); and
the to-be-charged vehicle (200) further comprises a sixth resistor (R6), one end of the sixth resistor (R6) is connected to the CC2 hole of the charging outlet (240) to form a second detection point (c), and another end of the sixth resistor (R6) is connected to a second pull-up voltage,
wherein the charging control device (210) is further configured to detect a voltage of the second detection point (c), and determine a status of the connection between the second adapter portion (320) and the charging outlet (240) according to the voltage of the second detection point (c);
wherein preferably the to-be-charged vehicle (200) further comprises:
a third switch (K3), wherein one end of the third switch (K3) is connected to the first electrode of the second power battery (220), and another end of the third switch (K3) is connected to the DC+ hole of the charging outlet (240); and
a fourth switch (K4), wherein one end of the fourth switch (K4) is connected to the second electrode of the second power battery (220), and another end of the fourth switch (K4) is connected to the DC- hole of the charging outlet (240),
wherein preferably the charging control device (210) is further configured to control, according to the status of the connection between the second adapter portion (320) and the charging outlet (240) or charging and discharging data, the third switch (K3) and the fourth switch (K4) to be turned on or off.

## Patentansprüche

1. Entladefahrzeug (100), umfassend eine Entladesteuervorrichtung (110), eine erste Leistungsbatterie (120), einen Motor (M) und eine Motorsteuerschaltung (130), wobei der Motor (M) Dreiphasen-Wicklungsinduktoren (LA, LB, LC) und einen Neutralleiter (N) umfasst, der mit den Dreiphasen-Wicklungsinduktoren (LA, LB, LC) verbunden ist, eine erste Elektrode der ersten Leistungsbatterie (120) mit einem ersten Eingangsanschluss der Motorsteuerschaltung (130) verbunden ist, eine zweite Elektrode der ersten Leistungsbatterie (120) mit einem zweiten Eingangsanschluss der Motorsteuerschaltung (130) verbunden ist und drei Ausgangsanschlüsse der Motorsteuerschaltung jeweils mit den Dreiphasen-Wicklungsinduktoren (LA, LB, LC) verbunden sind,
wobei, wenn das Entladefahrzeug (100) eine Ladeverbindung zu einem externen zu ladenden Fahrzeug (200) durch Verwenden einer externen Ladeverbindungsvorrichtung (300) herstellt, der Neutralleiter (N) mit einer ersten Elektrode einer zweiten Leistungsbatterie (220) des zu ladenden Fahrzeugs (200) durch die Ladeverbindungsvorrichtung (300) verbunden ist, die zweite Elektrode der ersten Leistungsbatterie (120) mit einer zweiten Elektrode der zweiten Leistungsbatterie (220) durch die Ladeverbindungsvorrichtung (300) verbunden ist und die Entladesteuervorrichtung (110) konfiguriert ist, um die Motorsteuerschaltung (130) zu steuern, um ein Gleichstrom-Abwärtsladen der zweiten Leistungsbatterie (220) durch die erste Leistungsbatterie (120) zu realisieren;
**gekennzeichnet dadurch, dass** es ferner umfasst:
eine Abwärtsschaltung (400), wobei ein erster Eingangsanschluss der Abwärtsschaltung (400) mit der ersten Elektrode der ersten Leistungsbatterie (120) verbunden ist, ein zweiter Eingangsanschluss der Abwärtsschaltung (400) mit der zweiten Elektrode der ersten Leistungsbatterie (120) verbunden ist, ein erster Ausgangsanschluss der Abwärtsschaltung (400) mit der ersten Elektrode der zweiten Leistungsbatterie (220) durch die Ladeverbindungsvorrichtung (300) verbunden ist, ein zweiter Ausgangsanschluss der Abwärtsschaltung (400) mit der zweiten Elektrode der zweiten Leistungsbatterie (220) durch die Ladeverbindungsvorrichtung (300) verbunden ist und die Abwärtsschaltung (400) konfiguriert ist, um die Gleichstrom-Abwärtsladung der zweiten Leistungsbatterie (220) durch die erste Leistungsbatterie (120) zu realisieren; und
**dadurch, dass** ein erster Entladezweig durch den Motor (M) und die Motorsteuerschaltung (130) ausgebildet ist, ein zweiter Entladezweig durch die Abwärtsschaltung (400) ausgebildet ist, der erste Entladezweig und der zweite Entladezweig parallel zwischen der ersten Leistungsbatterie (120) und der zweiten Leistungsbatterie (220) angeordnet sind und die erste Leistungsbatterie (120) ein Entladen an die zweite Leistungsbatterie (220) über einen von dem ersten Entladezweig oder dem zweiten Entladezweig durchführt.

2. Entladefahrzeug nach Anspruch 1, ferner umfassend:
einen Ableitwiderstand (R), wobei ein Ende des Ableitwiderstands (R) mit dem Neutralleiter (N) verbunden ist und ein anderes Ende des Ableitwiderstands (R) mit der zweiten Elektrode der ersten Leistungsbatterie (120) verbunden ist; und
einen ersten Kondensator (C1), der parallel zu dem Ableitwiderstand (R) verbunden ist.

3. Entladefahrzeug nach Anspruch 1, wobei die Abwärtsschaltung (400) umfasst:
eine erste Schaltröhre (Q1), wobei ein erstes Ende der ersten Schaltröhre (Q1) mit der ersten Elektrode der ersten Leistungsbatterie (120) verbunden ist;
eine zweite Schaltröhre (Q2), wobei ein erstes Ende der zweiten Schaltröhre (Q2) mit einem zweiten Ende der ersten Schaltröhre (Q1) verbunden ist, um einen ersten Knoten (a) auszubilden, und ein zweites Ende der zweiten Schaltröhre (Q2) mit der zweiten Elektrode der ersten Leistungsbatterie (120) verbunden ist;
einen ersten Induktor (L1), wobei ein Ende des ersten Induktors (L1) mit dem ersten Knoten (a) verbunden ist und ein anderes Ende des ersten Induktors (L1) mit der ersten Elektrode der zweiten Leistungsbatterie (220) durch die Ladeverbindungsvorrichtung (300) verbunden ist; und
einen zweiten Kondensator (C2), wobei ein Ende des zweiten Kondensators (C2) mit dem anderen Ende des ersten Induktors (L1) verbunden ist und ein anderes Ende des zweiten Kondensators (C2) mit der zweiten Elektrode der ersten Leistungsbatterie (120) verbunden ist,
wobei die Entladesteuervorrichtung (110) ferner mit Steuerenden der ersten Schaltröhre (Q1) und der zweiten Schaltröhre (Q2) verbunden ist, um jeweils die erste Schaltröhre (Q1) und die zweite Schaltröhre (Q2) zu steuern, um ein- oder ausgeschaltet zu werden.

4. Entladefahrzeug nach einem der Ansprüche 1 bis 3, ferner umfassend einen Entladeauslass (140), der an dem Entladefahrzeug (100) angeordnet ist, um mit einem ersten Adapterabschnitt (310) der Ladeverbindungsvorrichtung (300) adaptiv verbunden zu werden, wobei ein Gleichstrom+-Loch, ein Gleichstrom-Loch, ein PE-Loch, ein CANH-Loch, ein CANL-Loch, ein A+-Loch, ein A--Loch, ein CC1-Loch und ein CC2-Loch an dem Entladeauslass (140) angeordnet sind, das Gleichstrom+-Loch und das Gleichstrom--Loch des Entladeauslasses (140) jeweils mit dem Neutralleiter (N) und der zweiten Elektrode der ersten Leistungsbatterie (120) verbunden sind, das PE-Loch des Entladeauslasses (140) mit einer Karosseriemasse (GND1) des Entladefahrzeugs (100) verbunden ist, das CANH-Loch und das CANL-Loch des Entladeauslasses (140) beide mit der Entladesteuervorrichtung (110) verbunden sind und das A+-Loch und das A--Loch des Entladeauslasses (140) beide mit der Entladesteuervorrichtung (110) verbunden sind,
wobei, wenn der Entladeauslass (140) mit dem ersten Adapterabschnitt (310) adaptiv verbunden ist, das Gleichstrom+-Loch, das Gleichstrom--Loch, das PE-Loch, das CANH-Loch, das CANL-Loch, das A+-Loch, das A--Loch, das CC1-Loch und das CC2-Loch an dem Entladeauslass (140) jeweils entsprechend mit einem Gleichstrom+-Stift, einem Gleichstrom--Stift, einem PE-Stift, einem CANH-Stift, einem CANL-Stift, einem A+-Stift, einem A--Stift, einem CC1-Stift und einem CC2-Stift an dem ersten Adapterabschnitt (310) verbunden sind.

5. Entladefahrzeug nach Anspruch 4, wobei der erste Adapterabschnitt (310) einen zweiten Widerstand (R2), einen dritten Widerstand (R3) und einen Auslöseschalter (S) umfasst, ein Ende des zweiten Widerstands (R2) mit dem CC1-Stift des ersten Adapterabschnitts (310) verbunden ist, ein Ende des dritten Widerstands (R3) mit dem PE-Stift des ersten Adapterabschnitts (310) verbunden ist, ein anderes Ende des dritten Widerstands (R3) mit einem anderen Ende des zweiten Widerstands (R2) verbunden ist und der Auslöseschalter (S) parallel zu dem zweiten Widerstand (R2) verbunden ist,
wobei der Entladeauslass (140) einen vierten Widerstand (R4) umfasst, das Entladefahrzeug (100) ferner einen ersten Widerstand (R1) umfasst, ein Ende des vierten Widerstands (R4) mit dem PE-Loch des Entladeauslasses (140) verbunden ist, ein anderes Ende des vierten Widerstands (R4) mit einem Ende des ersten Widerstands (R1) verbunden ist, um einen ersten Erfassungspunkt (b) auszubilden und ein anderes Ende des ersten Widerstands (R1) mit einer ersten Pullup-Spannung verbunden ist,
wobei die Entladesteuervorrichtung (110) ferner konfiguriert ist, um eine Spannung des ersten Erfassungspunkts (b) zu erfassen und einen Status der Verbindung zwischen dem ersten Adapterabschnitt (310) und dem Entladeauslass (140) gemäß der Spannung des ersten Erfassungspunkts (b) zu bestimmen.

6. Entladefahrzeug nach Anspruch 4 oder 5, ferner umfassend:
einen ersten Schalter (K1), wobei ein Ende des ersten Schalters (K1) mit dem Neutralleiter (N) verbunden ist und ein anderes Ende des ersten Schalters (K1) mit dem Gleichstrom+-Loch des Entladeauslasses (140) verbunden ist;
einen zweiten Schalter (K2), wobei ein Ende des zweiten Schalters (K2) mit der zweiten Elektrode der ersten Leistungsbatterie (120) verbunden ist und ein anderes Ende des zweiten Schalters (K2) mit dem Gleichstrom--Loch des Entladeauslasses (140) verbunden ist, wobei
die Entladesteuervorrichtung (110) ferner konfiguriert ist, um gemäß dem Status der Verbindung zwischen dem ersten Adapterabschnitt (310) und dem Entladeauslass (140) oder Lade- und Entladedaten den ersten Schalter (K1) und den zweiten Schalter (K2) zu steuern, um ein- oder ausgeschaltet zu werden.

7. Entladefahrzeug nach einem der Ansprüche 1 bis 6, wobei die Entladesteuervorrichtung (110) ferner konfiguriert ist, um die Motorsteuerschaltung (130) zu steuern, um ein einphasiges Laden oder zweiphasiges Laden oder dreiphasiges Laden der zweiten Leistungsbatterie (220) zu realisieren; wobei vorzugsweise die Entladesteuervorrichtung (110) ferner konfiguriert ist zum:
Erlangen eines minimalen Werts aus einem maximal zulässigen Entladestrom des Entladefahrzeugs (100), einem maximal zulässigen Ladestrom des zu ladenden Fahrzeugs (200) und einem maximal zulässigen Durchgangsstrom der Ladeverbindungsvorrichtung (300);
Durchführen von einphasigem Laden an der zweiten Leistungsbatterie (220) durch Verwenden der Motorsteuerschaltung (130), wenn der minimale Wert geringer als ein erster voreingestellter Wert ist;
Durchführen von zweiphasigem Laden an der zweiten Leistungsbatterie (220) durch Verwenden der Motorsteuerschaltung (130), wenn der minimale Wert größer als oder gleich dem ersten voreingestellten Wert und geringer als ein zweiter voreingestellter Wert ist;
Durchführen von dreiphasigem Laden an der zweiten Leistungsbatterie (220) durch Verwenden der Motorsteuerschaltung (130), wenn der minimale Wert größer als oder gleich dem zweiten voreingestellten Wert ist.

8. Fahrzeugladesystem, umfassend: das Entladefahrzeug (100) nach einem der Ansprüche 1 bis 7, ein zu ladendes Fahrzeug (200) und eine dazwischen verbundene Ladeverbindungsvorrichtung (300),
wobei das zu ladende Fahrzeug (200) eine zweite Leistungsbatterie (220) umfasst, eine erste Elektrode der zweiten Leistungsbatterie (220) mit dem Neutralleiter (N) durch die Ladeverbindungsvorrichtung (300) verbunden ist und eine zweite Elektrode der zweiten Leistungsbatterie (220) mit der zweiten Elektrode der ersten Leistungsbatterie (120) durch die Ladeverbindungsvorrichtung (300) verbunden ist.

9. Fahrzeugladesystem nach Anspruch 8, wobei ein Ladeauslass (240) an dem zu ladenden Fahrzeug (200) angeordnet ist und die Ladeverbindungsvorrichtung (300) umfasst:
einen ersten Adapterabschnitt (310), der mit dem Entladeauslass (140) des Entladefahrzeugs (100) adaptiv verbunden ist;
einen zweiten Adapterabschnitt (320), der mit dem Entladeauslass (240) adaptiv verbunden ist; und
einen Kabelstrang (330), der zwischen dem ersten Adapterabschnitt (310) und dem zweiten Adapterabschnitt (320) verbunden ist.

10. Fahrzeugladesystem nach Anspruch 9, wobei der Kabelstrang (300) eine Gleichstrom+-Leitung, eine Gleichstrom--Leitung, eine PE-Leitung, eine CANH-Leitung, eine CANL-Leitung, eine A+-Leitung und eine A--Leitung umfasst,
wobei ein Gleichstrom+-Stift, ein Gleichstrom--Stift, ein PE-Stift, ein CANH-Stift, ein CANL-Stift, ein A+-Stift und ein A--Stift an jedem des ersten Adapterabschnitts (310) und des zweiten Adapterabschnitts (320) angeordnet sind und jeweils entsprechend mit der Gleichstrom+-Leitung, der Gleichstrom--Leitung, der PE-Leitung, der CANH-Leitung, der CANL-Leitung, der A+-Leitung und der A-Leitung verbunden sind,
wobei ein CC1-Stift und ein CC2-Stift ferner an jedem des ersten Adapterabschnitts (310) und des zweiten Adapterabschnitts (320) angeordnet sind.

11. Fahrzeugladesystem nach Anspruch 10, wobei ein Gleichstrom+-Loch, ein Gleichstrom--Loch, ein PE-Loch, ein CANH-Loch, ein CANL-Loch, ein A+-Loch, ein A--Loch, ein CC1-Loch und ein CC2-Loch an dem Ladeauslass (240) angeordnet sind, das PE-Loch des Ladeauslass (240) mit einer Karosseriemasse (GND2) des zu ladenden Fahrzeugs (200) verbunden ist, das CANH-Loch und das CANL-Loch des Ladeauslasses (240) beide mit der Ladesteuervorrichtung (210) verbunden sind und das A+-Loch und das A--Loch des Ladeauslasses (240) beide mit der Ladesteuervorrichtung (210) verbunden sind,
wobei das Gleichstrom+-Loch, das Gleichstrom--Loch, das PE-Loch, das CANH-Loch, das CANL-Loch, das A+-Loch, das A--Loch, das CC1-Loch und das CC2-Loch an dem Ladeauslass (240) jeweils entsprechend mit dem Gleichstrom+-Stift, dem Gleichstrom--Stift, dem PE-Stift, dem CANH-Stift, dem CANL-Stift, dem A+-Stift, dem A--Stift, dem CC1-Stift und dem CC2-Stift an dem zweiten Adapterabschnitt (320) verbunden sind.

12. Fahrzeugladesystem nach Anspruch 10 oder 11, wobei der erste Adapterabschnitt (310) einen zweiten Widerstand (R2), einen dritten Widerstand (R3) und einen Auslöseschalter (S) umfasst, ein Ende des zweiten Widerstands (R2) mit dem CC1-Stift des ersten Adapterabschnitts (310) verbunden ist, ein Ende des dritten Widerstands (R3) mit dem PE-Stift des ersten Adapterabschnitts (310) verbunden ist, ein anderes Ende des dritten Widerstands (R3) mit einem anderen Ende des zweiten Widerstands (R2) verbunden ist und der Auslöseschalter (S) parallel zu dem zweiten Widerstand (R2) verbunden ist.

13. Fahrzeugladesystem nach Anspruch 11 oder 12, wobei
der zweite Adapterabschnitt (320) einen fünften Widerstand (R5) umfasst, ein Ende des fünften Widerstands (R5) mit dem PE-Stift des zweiten Adapterabschnitts (320) verbunden ist und ein anderes Ende des fünften Widerstands (R5) mit dem CC2-Stift des zweiten Adapterabschnitts (320) verbunden ist; und
das zu ladende Fahrzeug (200) ferner einen sechsten Widerstand (R6) umfasst, ein Ende des sechsten Widerstands (R6) mit dem CC2-Loch des Ladeauslasses (240) verbunden ist, um einen zweiten Erfassungspunkt (c) auszubilden, und ein anderes Ende des sechsten Widerstands (R6) mit einer zweiten Pullup-Spannung verbunden ist,
wobei die Ladesteuervorrichtung (210) ferner konfiguriert ist, um eine Spannung des zweiten Erfassungspunkts (c) zu erfassen und einen Status der Verbindung zwischen dem zweiten Adapterabschnitt (320) und dem Ladeauslass (240) gemäß der Spannung des zweiten Erfassungspunkts (c) zu bestimmen;
wobei vorzugsweise das zu ladende Fahrzeug (200) ferner umfasst:
einen dritten Schalter (K3), wobei ein Ende des dritten Schalters (K3) mit der ersten Elektrode der zweiten Leistungsbatterie (220) verbunden ist und ein anderes Ende des dritten Schalters (K3) mit dem Gleichstrom+-Loch des Ladeauslasses (240) verbunden ist; und
einen vierten Schalter (K4), wobei ein Ende des vierten Schalters (K4) mit der zweiten Elektrode der zweiten Leistungsbatterie (220) verbunden ist und ein anderes Ende des vierten Schalters (K4) mit dem Gleichstrom--Loch des Ladeauslasses (240) verbunden ist,
wobei vorzugsweise die Ladesteuervorrichtung (210) ferner konfiguriert ist, um gemäß dem Status der Verbindung zwischen dem zweiten Adapterabschnitt (320) und dem Ladeauslass (240) oder Lade- und Entladedaten den dritten Schalter (K3) und den vierten Schalter (K4) zu steuern, um ein- oder ausgeschaltet zu werden.

## Revendications

1. Véhicule de décharge (100), comprenant un dispositif de commande de décharge (110), une première batterie d'alimentation (120), un moteur (M) et un circuit de commande de moteur (130), dans lequel le moteur (M) comprend des bobines d'inductance triphasées (LA, LB, LC) et un fil neutre (N) connecté aux bobines d'inductance triphasées (LA, LB, LC), une première électrode de la première batterie d'alimentation (120) est connectée à une première borne d'entrée du circuit de commande de moteur (130), une seconde électrode de la première batterie d'alimentation (120) est connectée à une seconde borne d'entrée du circuit de commande de moteur (130), et trois bornes de sortie du circuit de commande de moteur sont respectivement connectées aux bobines d'inductance triphasées (LA, LB, LC),
dans lequel, lorsque le véhicule de décharge (100) établit une connexion de charge avec un véhicule à charger (200) externe en utilisant un dispositif de connexion de charge externe (300), le fil neutre (N) est connecté à une première électrode d'une seconde batterie d'alimentation (220) du véhicule à charger (200) par le dispositif de connexion de charge (300), la seconde électrode de la première batterie d'alimentation (120) est connectée à une seconde électrode de la seconde batterie d'alimentation (220) par le dispositif de connexion de charge (300), et le dispositif de commande de décharge (110) est configuré pour commander le circuit de commande de moteur (130), de manière à réaliser une charge abaisseuse CC de la seconde batterie d'alimentation (220) par la première batterie d'alimentation (120) ;
**caractérisé par le fait qu'**il comprend en outre :
un circuit abaisseur (400), dans lequel une première borne d'entrée du circuit abaisseur (400) est connectée à la première électrode de la première batterie d'alimentation (120), une seconde borne d'entrée du circuit abaisseur (400) est connectée à la seconde électrode de la première batterie d'alimentation (120), une première borne de sortie du circuit abaisseur (400) est connectée à la première électrode de la seconde batterie d'alimentation (220) par le dispositif de connexion de charge (300), une seconde borne de sortie du circuit abaisseur (400) est connectée à la seconde électrode de la seconde batterie d'alimentation (220) par le dispositif de connexion de charge (300), et le circuit abaisseur (400) est configuré pour réaliser la charge abaisseuse CC de la seconde batterie d'alimentation (220) par la première batterie d'alimentation (120) ; et
**en ce qu'**une première dérivation de décharge est formée par le moteur (M) et le circuit de commande de moteur (130), une seconde dérivation de décharge est formée par le circuit abaisseur (400), la première dérivation de décharge et la seconde dérivation de décharge sont disposées en parallèle entre la première batterie d'alimentation (120) et la seconde batterie d'alimentation (220), et la première batterie d'alimentation (120) effectue une décharge vers la seconde batterie d'alimentation (220) à travers l'une de la première dérivation de décharge ou la seconde dérivation de décharge.

2. Véhicule de décharge selon la revendication 1, comprenant en outre :
une résistance de fuite (R), dans lequel une extrémité de la résistance de fuite (R) est connectée au fil neutre (N), et une autre extrémité de la résistance de fuite (R) est connectée à la seconde électrode de la première batterie d'alimentation (120) ; et
un premier condensateur (C1) connecté en parallèle à la résistance de fuite (R).

3. Véhicule de décharge selon la revendication 1, dans lequel le circuit abaisseur (400) comprend :
un premier tube de commutation (Q1), dans lequel une première extrémité du premier tube de commutation (Q1) est connectée à la première électrode de la première batterie d'alimentation (120) ;
un second tube de commutation (Q2), dans lequel une première extrémité du second tube de commutation (Q2) est connectée à une seconde extrémité du premier tube de commutation (Q1) pour former un premier nœud (a), et une seconde extrémité du second tube de commutation (Q2) est connectée à la seconde électrode de la première batterie d'alimentation (120) ;
un premier inducteur (L1), dans lequel une extrémité du premier inducteur (L1) est connectée au premier nœud (a), et une autre extrémité du premier inducteur (L1) est connectée à la première électrode de la seconde batterie d'alimentation (220) par le dispositif de connexion de charge (300) ; et
un second condensateur (C2), dans lequel une extrémité du second condensateur (C2) est connectée à l'autre extrémité du premier inducteur (L1), et une autre extrémité du second condensateur (C2) est connectée à la seconde électrode de la première batterie d'alimentation (120),
dans lequel le dispositif de commande de décharge (110) est en outre relié à des extrémités de commande du premier tube de commutation (Q1) et du second tube de commutation (Q2) pour commander respectivement l'allumage ou l'arrêt du premier tube de commutation (Q1) et du second tube de commutation (Q2).

4. Véhicule de décharge selon l'une quelconque des revendications 1 à 3, comprenant en outre une sortie de décharge (140) disposée sur le véhicule de décharge (100) pour être reliée de manière adaptative à une première partie adaptateur (310) du dispositif de connexion de charge (300), un trou CC+, un trou CC-, un trou PE, un trou CANH, un trou CANL, un trou A+, un trou A-, un trou CC1 et un trou CC2 sont disposés sur la sortie de décharge (140), le trou CC+ et le trou CC- de la sortie de décharge (140) sont respectivement connectés au fil neutre (N) et à la seconde électrode de la première batterie d'alimentation (120), le trou PE de la sortie de décharge (140) est connecté à une masse de corps (GND1) du véhicule de décharge (100), le trou CANH et le trou CANL de la sortie de décharge (140) sont tous deux reliés au dispositif de commande de décharge (110), et le trou A+ et le trou A- de la sortie de décharge (140) sont tous deux reliés au dispositif de commande de décharge (110),
dans lequel, lorsque la sortie de décharge (140) est reliée de manière adaptative à la première partie d'adaptateur (310), le trou CC+, le trou CC-, le trou PE, le trou CANH, le trou CANL, le trou A+, le trou A-, le trou CC1 et le trou CC2 de la sortie de décharge (140) sont respectivement reliés de manière correspondante à une broche CC+, une broche CC-, une broche PE, une broche CANH, une broche CANL, une broche A+, une broche A-, une broche CC1 et une broche CC2 sur la première partie d'adaptateur (310).

5. Véhicule de décharge selon la revendication 4, dans lequel la première partie d'adaptateur (310) comprend une deuxième résistance (R2), une troisième résistance (R3) et un commutateur de déclenchement (S), une extrémité de la deuxième résistance (R2) est connectée à la broche CC1 de la première partie d'adaptateur (310), une extrémité de la troisième résistance (R3) est connectée à la broche PE de la première partie d'adaptateur (310), une autre extrémité de la troisième résistance (R3) est connectée à une autre extrémité de la deuxième résistance (R2), et le commutateur de déclenchement (S) est connecté en parallèle à la deuxième résistance (R2),
dans lequel la sortie de décharge (140) comprend une quatrième résistance (R4), le véhicule de décharge (100) comprend en outre une première résistance (R1), une extrémité de la quatrième résistance (R4) est reliée au trou PE de la sortie de décharge (140), une autre extrémité de la quatrième résistance (R4) est reliée à une extrémité de la première résistance (R1) pour former un premier point de détection (b), et une autre extrémité de la première résistance (R1) est connectée à une première tension de polarisation à l'alimentation,
dans lequel le dispositif de commande de décharge (110) est en outre configuré pour détecter une tension du premier point de détection (b) et déterminer un état de la connexion entre la première partie d'adaptateur (310) et la sortie de décharge (140) selon la tension du premier point de détection (b).

6. Véhicule de décharge selon la revendication 4 ou 5, comprenant en outre :
un premier commutateur (K1), dans lequel une extrémité du premier commutateur (K1) est connectée au fil neutre (N), et une autre extrémité du premier commutateur (K1) est connectée au trou CC+ de la sortie de décharge (140) ;
un deuxième commutateur (K2), dans lequel une extrémité du deuxième commutateur (K2) est connectée à la seconde électrode de la première batterie d'alimentation (120), et une autre extrémité du deuxième commutateur (K2) est connectée au trou CC- de la sortie de décharge (140), dans lequel
le dispositif de commande de décharge (110) est en outre configuré pour commander, selon l'état de la connexion entre la première partie d'adaptateur (310) et la sortie de décharge (140) ou les données de charge et de décharge, l'allumage ou l'extinction du premier commutateur (K1) et du deuxième commutateur (K2).

7. Véhicule de décharge selon l'une quelconque des revendications 1 à 6, dans lequel le dispositif de commande de décharge (110) est en outre configuré pour commander le circuit de commande de moteur (130) pour réaliser une charge monophasée ou une charge biphasée ou une charge triphasée de la seconde batterie d'alimentation (220) ; dans lequel, de préférence, le dispositif de commande de décharge (110) est en outre configuré pour :
acquérir une valeur minimale d'un courant de décharge maximal admissible du véhicule de décharge (100), d'un courant de charge maximal admissible du véhicule à charger (200) et d'un courant de passage maximal admissible du dispositif de connexion de charge (300) ;
effectuer une charge monophasée sur la seconde batterie d'alimentation (220) en utilisant le circuit de commande de moteur (130) lorsque la valeur minimale est inférieure à une première valeur prédéfinie ;
effectuer une charge biphasée sur la seconde batterie d'alimentation (220) en utilisant le circuit de commande de moteur (130) lorsque la valeur minimale est supérieure ou égale à la première valeur prédéfinie et inférieure à une seconde valeur prédéfinie ;
effectuer une charge triphasée sur la seconde batterie d'alimentation (220) en utilisant le circuit de commande de moteur (130) lorsque la valeur minimale est supérieure ou égale à la seconde valeur prédéfinie.

8. Système de charge de véhicule, comprenant : le véhicule de décharge (100) selon l'une quelconque des revendications 1 à 7, un véhicule à charger (200) et un dispositif de connexion de charge (300) connecté entre eux,
dans lequel le véhicule à charger (200) comprend une seconde batterie d'alimentation (220), une première électrode de la seconde batterie d'alimentation (220) est connectée au fil neutre (N) par le dispositif de connexion de charge (300), et une seconde électrode de la seconde batterie d'alimentation (220) est connectée à la seconde électrode de la première batterie d'alimentation (120) par le dispositif de connexion de charge (300).

9. Système de charge de véhicule selon la revendication 8, dans lequel une sortie de charge (240) est disposée sur le véhicule à charger (200), et le dispositif de connexion de charge (300) comprend :
une première partie d'adaptateur (310), reliée de manière adaptative à la sortie de décharge (140) du véhicule de décharge (100) ;
une seconde partie d'adaptateur (320), reliée de manière adaptative à la sortie de décharge (240) ; et
un faisceau de câbles (330), connecté entre la première partie d'adaptateur (310) et la seconde partie d'adaptateur (320).

10. Système de charge de véhicule selon la revendication 9, dans lequel le faisceau électrique (300) comprend une ligne CC+, une ligne CC-, une ligne PE, une ligne CANH, une ligne CANL, une ligne A+ et une ligne A-,
dans lequel une broche CC+, une broche CC-, une broche PE, une broche CANH, une broche CANL, une broche A+ et une broche A- sont disposées sur chacune de la première partie d'adaptateur (310) et de la seconde partie d'adaptateur (320), et sont respectivement connectées de manière correspondante à la ligne CC+, à la ligne CC-, à la ligne PE, à la ligne CANH, à la ligne CANL, à la ligne A+ et à la ligne A-,
dans lequel une broche CC1 et une broche CC2 sont en outre disposées sur chacune de la première partie d'adaptateur (310) et de la seconde partie d'adaptateur (320).

11. Système de charge de véhicule selon la revendication 10, dans lequel un trou CC+, un trou CC-, un trou PE, un trou CANH, un trou CANL, un trou A+, un trou A-, un trou CC1 et un trou CC2 sont disposés sur la sortie de charge (240), le trou PE de la sortie de charge (240) est connecté à une masse de corps (GND2) du véhicule à charger (200), le trou CANH et le trou CANL de la sortie de charge (240) sont tous deux reliés au dispositif de commande de charge (210), et le trou A+ et le trou A- de la sortie de charge (240) sont tous deux reliés au dispositif de commande de charge (210),
dans lequel le trou CC+, le trou CC-, le trou PE, le trou CANH, le trou CANL, le trou A+, le trou A-, le trou CC1 et le trou CC2 de la sortie de charge (240) sont respectivement connectés de manière correspondante à la broche CC+, à la broche CC-, à la broche PE, à la broche CANH, à la broche CANL, à la broche A+, à la broche A-, à la broche CC1 et à la broche CC2 sur la seconde partie d'adaptateur (320).

12. Système de charge de véhicule selon la revendication 10 ou 11, dans lequel la première partie d'adaptateur (310) comprend une deuxième résistance (R2), une troisième résistance (R3) et un commutateur de déclenchement (S), une extrémité de la deuxième résistance (R2) est connectée à la broche CC1 de la première partie d'adaptateur (310), une extrémité de la troisième résistance (R3) est reliée à la broche PE de la première partie d'adaptateur (310), une autre extrémité de la troisième résistance (R3) est reliée à une autre extrémité de la deuxième résistance (R2), et le commutateur de déclenchement (S) est connecté en parallèle à la deuxième résistance (R2).

13. Système de décharge de véhicule selon la revendication 11 ou 12, dans lequel
la seconde partie d'adaptateur (320) comprend une cinquième résistance (R5), une extrémité de la cinquième résistance (R5) est reliée à la broche PE de la seconde partie d'adaptateur (320), et une autre extrémité de la cinquième résistance (R5) est reliée à la broche CC2 de la seconde partie d'adaptateur (320) ; et
le véhicule à charger (200) comprend en outre une sixième résistance (R6), une extrémité de la sixième résistance (R6) est connectée au trou CC2 de la sortie de charge (240) pour former un second point de détection (c), et une autre extrémité de la sixième résistance (R6) est connectée à une seconde tension de polarisation à l'alimentation,
dans lequel le dispositif de commande de charge (210) est en outre configuré pour détecter une tension du second point de détection (c) et déterminer un état de la connexion entre la seconde partie d'adaptateur (320) et la sortie de charge (240) selon la tension du second point de détection (c) ;
dans lequel, de préférence, le véhicule à charger (200) comprend en outre :
un troisième commutateur (K3), dans lequel une extrémité du troisième commutateur (K3) est connectée à la première électrode de la seconde batterie d'alimentation (220), et une autre extrémité du troisième commutateur (K3) est connectée au trou CC+ de la sortie de charge (240) ; et
un quatrième commutateur (K4), dans lequel une extrémité du quatrième commutateur (K4) est connectée à la seconde électrode de la seconde batterie d'alimentation (220), et une autre extrémité du quatrième commutateur (K4) est connectée au trou CC- de la sortie de charge (240),
dans lequel, de préférence, le dispositif de commande de charge (210) est en outre configuré pour commander, selon l'état de la connexion entre la seconde partie d'adaptateur (320) et la sortie de charge (240) ou des données de charge et de décharge, l'allumage ou l'extinction du troisième commutateur (K3) et du quatrième commutateur (K4).
